# EUROPÄISCHE PATENTSCHRIFT

(11) **EP 1 741 574 B1**
(45) Veröffentlichungstag und Bekanntmachung des Hinweises auf die Patenterteilung: **06.02.2008**
(21) Anmeldenummer: 06010156.5
(22) Anmeldetag: 17.05.2006
(51) Int. Cl.: B60G 3/20, B60G 7/00, B60G 21/055

(54) **Radaufhängung für die gelenkten Räder eines Kraftfahrzeuges**
Wheel support for the steerable wheels of a motor vehicle
Suspension de roue pour les roues directrices d'un véhicule automobile

(30) Priorität: 04.07.2005 DE 102005031088
(43) Veröffentlichungstag der Anmeldung: 10.01.2007
(73) Patentinhaber: AUDI AG, 85045 Ingolstadt (DE)
(72) Erfinder: Züge, Frank, 85110 Schelldorf (DE); Steigerwald, Alexander, 91177 Thalmässing (DE); Bschierl, Christian, 85095 Denkendorf (DE)
(74) Vertreter: Asch, Konrad

(56) Entgegenhaltungen:
- DE-A1- 3 826 930
- DE-A1- 4 242 815
- DE-A1- 4 313 978
- US-A- 6 079 722
- US-A- 6 089 582
- PATENT ABSTRACTS OF JAPAN Bd. 017, Nr. 576 (M-1499), 20. Oktober 1993 (1993-10-20) & JP 05 169941 A (MAZDA MOTOR CORP), 9. Juli 1993 (1993-07-09)

## Beschreibung

Die Erfindung betrifft eine Radaufhängung für die gelenkten Räder eines Kraftfahrzeuges gemäß dem Oberbegriff des Patentanspruches 1.

Eine solche Radaufhängung wird in jedem der Dokumenten DE 3 826 930, DE 4 313 978 und JP 05 169 941 beschrieben.

Aufgabe der Erfindung ist es, eine Radaufhängung der gattungsgemäßen Art vorzuschlagen, die eine baulich und funktionell vorteilhafte Anordnung des Stabilisators ermöglicht, wobei zudem die Stabilisatorkräfte bei wechselseitigem Einfedern der Räder weitestgehend ohne nachteilige Beeinflussung der Radführungsfunktionen einleitbar sind.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß sind die die Schenkel des Stabilisators mit den unteren, vorderen Lenkern bzw. dem Federbein verbindenden Koppelstangen im wesentlichen parallel zur Lenkachse der Räder ausgerichtet sein. Dabei können die Koppelstangen in Seitenansicht gesehen vor der senkrechten Radmitte der Räder positioniert und in Rückansicht des Kraftfahrzeuges gesehen nach oben innen geneigt sein. Grundsätzlich wäre es aber auch möglich, die Koppelstangen in Seitenansicht gesehen nach vorne oben zu neigen, was aber wiederum einen anderen konstruktiven Aufbau voraussetzt. Damit können störende Momente des Stabilisators auf die Radführungselemente nahezu eliminiert und somit erreicht werden, dass die Rollspurkurve der Räder (mit Einfluss von Stabilisatorkräften) mit der Vorspurkurve ohne Stabilisatoreinfluss übereinstimmt.

Weiter wird vorgeschlagen, dass das Lenkgetriebe mit den Spurstangen etwa in Höhe der unteren Lenker und vor der Radmitte der Räder und der unteren, vorderen Lenker angeordnet ist, wobei bevorzugt ergänzend, aber auch alternativ dazu vorgesehen sein kann, dass der Stabilisator vor den Spurstangen positioniert ist, wobei seine in Längsrichtung verlaufenden Schenkel die Spurstangen queren. Dabei können die Koppelstangen mittelbar oder unmittelbar mit dem unteren, vorderen Lenker gelenkig verbunden sein. Dies ermöglicht neben der baulich günstigen Anordnung des Stabilisators eine funktionell vorteilhafte Einleitung der Stabilisatorkräfte in den unteren, vorderen Lenker, der gemäß Gattungsbegriff auch die Feder- und Dämpferkräfte aufnimmt und konstruktiv entsprechend robust ausgeführt ist.

Besonders vorteilhaft können die Koppelstangen des Stabilisators an einem Verbindungsteil des Federbeines mit jeweils dem unteren, vorderen Lenker gelenkig verbunden sein. Daraus resultiert eine besonders nahe Anbindung der Koppelstangen an den Radträger und damit verbunden eine relativ direkte Übersetzung zwischen Radfederweg und Koppelstangenweg; d. h., dass bei gleicher Stabilisatorwirkung dessen Torsionsfederrate vermindert werden kann (Gewichtsreduzierung). Ferner werden störende Momente aus den Stabilisatorkräften zusätzlich über das Federbein abgemindert.

Das Verbindungsteil des Federbeines kann baulich besonders einfach eine den Lenker teilweise umfassende Gabel sein, wobei die Koppelstangen an den Gabeln des Federbeines angelenkt sind. Des weiteren können die Schenkel des Stabilisators zur Herstellung eines erforderlichen Freiganges zu den Spurstangen und/oder den Rädern des Kraftfahrzeuges gekrümmt ausgebildet sein.

Ein Ausführungsbeispiel der Erfindung ist im folgenden mit weiteren Einzelheiten näher erläutert. Die schematische Zeichnung zeigt in:
- **Fig. 1**: in einer raumbildlichen Ansicht schräg von vorne eine linke Radaufhängung für gelenkte und angetriebene Räder eines Kraftfahrzeuges, mit oberen und unteren Lenkern, einem Radträger, einem Federbein, einer Lenkung und einem Stabilisator;
- **Fig. 2**: eine Seitenansicht auf den Radträger, die unteren Lenker und die Spurstange der Radaufhängung gemäß Fig. 1;
- **Fig. 3**: eine Draufsicht auf die unteren Lenker, die Spurstange und den Stabilisator der Radaufhängung nach Fig. 1;
- **Fig. 4**: eine grafische Darstellung der virtuellen Lenkachse und der von der Lenkachse überstrichenen Konusfläche über den Lenkbereich der Radaufhängung; und
- **Fig. 5**: eine grafische Darstellung des Momentandrehpols der unteren Lenker mit Radträger bei Längs- und Seitenkräften auf die Radaufhängung.

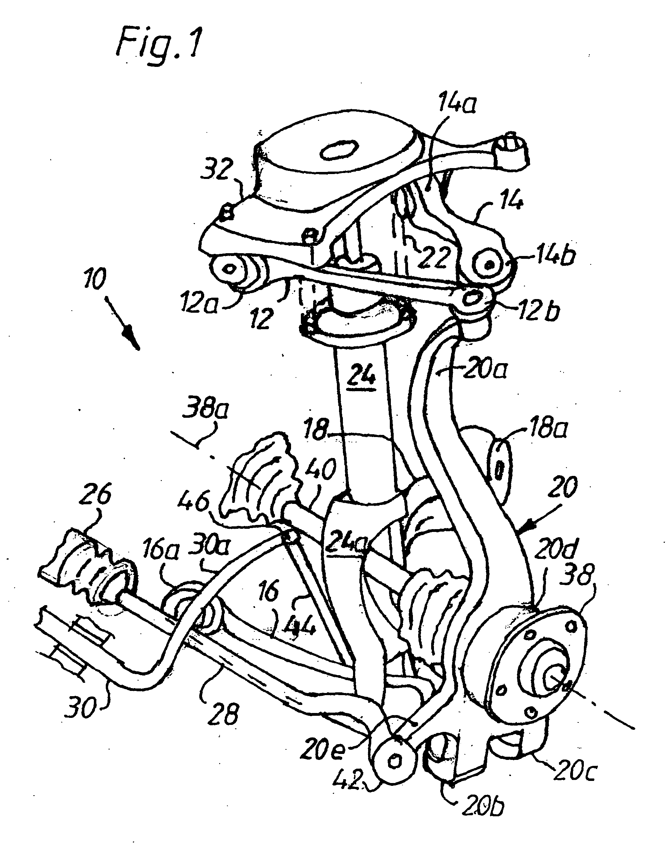

In den **Fig. 1 bis 3** ist eine vordere, linke Radaufhängung 10 für Kraftfahrzeuge dargestellt, die sich im wesentlichen aus zwei oberen einzelnen Lenkern 12, 14, zwei unteren einzelnen Lenkern 16, 18, einem Radträger 20, einem aus einer Tragfeder 22 und einem Teleskopstoßdämpfer 24 gebildeten Federbein, einem Zahnstangenlenkgetriebe 26 mit Spurstangen 28 und einem U-förmigen Stabilisator 30 zusammensetzt.

Das Zahnstangenlenkgetriebe 26 ist bekannter Bauart und nur angedeutet dargestellt. Die rechte Radaufhängung 10 sowie der quer verlaufende Stabilisator 30 sind spiegelbildlich gleich ausgeführt.

Die oberen Lenker 12, 14 sind wie ersichtlich in einem definierten Winkel zueinander angeordnet und über innere Lagerstellen 12a, 14a an einer Lagerkonsole 32 angelenkt. An der Lagerkonsole 32 ist ferner das Federbein 22, 24 gelenkig abgestützt. Die Lagerkonsole 32 ist mittels mehrerer Schrauben (nicht dargestellt) mit dem Aufbau des Kraftfahrzeuges fest verbunden.

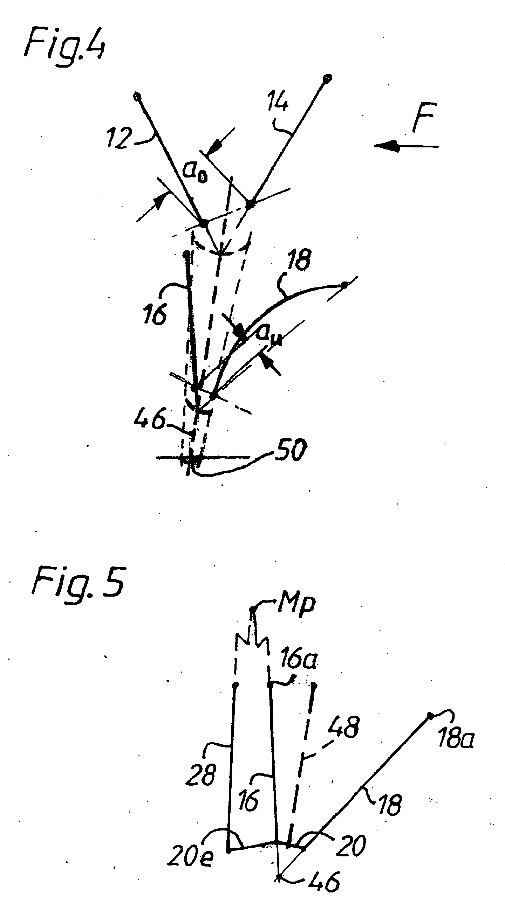

Die äußeren, als Kugelgelenke ausgebildeten Lagerstellen 12b, 14b der Lenker 12, 14 sind oberhalb des Rades (nicht dargestellt) des Kraftfahrzeuges an einem nach oben geführten Arm 20a des Radträgers 20 in einem definierten Koppelabstand aₒ angelenkt (vgl. **Fig. 4**). Der Arm 20a ist dabei zur Bereitstellung eines ausreichenden Freiganges des Rades nach innen gekrümmt ausgeführt.

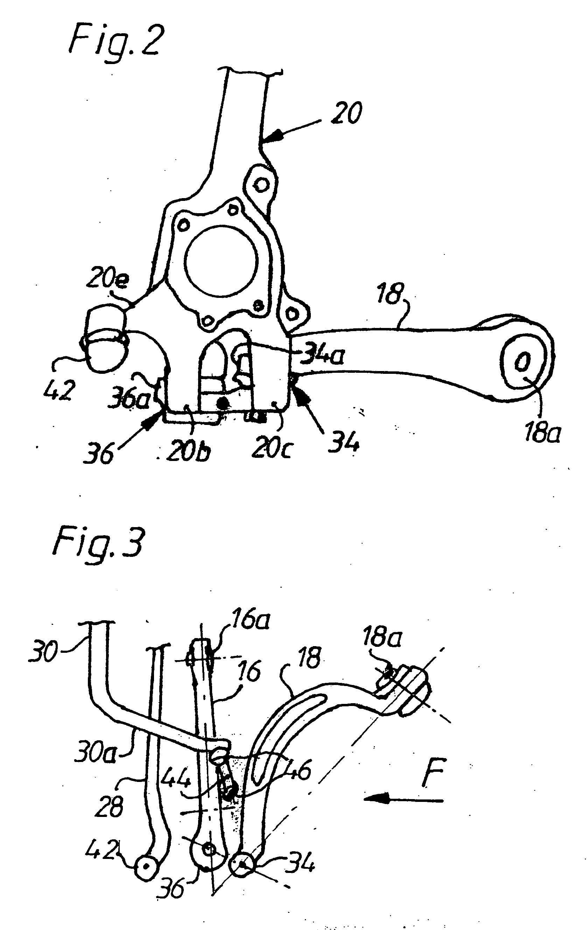

Die unteren Lenker 16, 18 sind einerseits über Lenkerlager 16a, 18a mit dem nicht dargestellten Aufbau des Kraftfahrzeuges gelenkig verbunden und andererseits an unteren Aufnahmen 20b, 20c des Radträgers 20 über Kugelgelenke 34, 36 (vgl. **Fig. 2**) in einem Koppelabstand aᵤ angelenkt. Die Aufnahmen 20b, 20c liegen relativ nahe unterhalb der Raddrehachse 38a, die durch die nicht dargestellte Radlagerung innerhalb eines nabenförmigen Abschnittes 20d des Radträgers 20 und einem drehbar gelagerten Radflansch 38 definiert ist. Der Radflansch 38 ist mit einer Antriebswelle 40 zum Antrieb des Rades trieblich verbunden.

Der vordere, untere Lenker 16 bildet dabei den entsprechend verstärkt ausgelegten Traglenker der Radaufhängung 10, an dem ein gabelförmiger Abschnitt 24a des Teleskopstoßdämpfers 24 in relativer Nähe zu den Aufnahmen 20b, 20c des Radträgers 20 angelenkt ist. Zur Abstützung des Federbeins 22, 24 an dem unteren vorderen Lenker 16 ist hier beispielhaft folgendes vorgesehen: Der Abschnitt 24a umgreift den Lenker 16 und ist unter Zwischenschaltung eines gummielastischen Lagers (nicht dargestellt) mit einer den Lenker 16 und die Schenkel des gabelförmigen Abschnittes 24a durchdringenden Schraube mit dem Lenker 16 verbunden. Wie ersichtlich ist, ist auch die Antriebswelle 40 durch den Abschnitt 24a hindurchgeführt.

Der vordere, untere Lenker 16 ist im wesentlichen quer zur Längsrichtung des Kraftfahrzeuges ausgerichtet, während der hintere, untere Lenker 18 in einem Winkel von ca. 45 Grad zum vorderen Lenker 16 angeordnet ist (vgl. Fig. 3). Durch die dargestellte, relativ starke Krümmung des Lenkers 18 nach innen ist der Freigang des Rades beim vollen Lenkeinschlag des Rades sichergestellt.

Das Zahnstangenlenkgetriebe 26 mit der abtreibenden Spurstange 28 ist in Fahrtrichtung F des Kraftfahrzeuges gesehen vor dem Lenker 16 im wesentlichen in der durch die unteren Lenker 16, 18 gebildeten Horizontalebene angeordnet, wobei die Spurstange 28 etwa parallel bzw. leicht gepfeilt zum Lenker 16 ausgerichtet ist. Die Spurstange 28 ist über ein Kugelgelenk 42 mit dem nach vorne ragenden Lenkarm 20e des Radträgers 20 verbunden.

Noch räumlich vor dem Lenkgetriebe 26 ist der U-förmige Stabilisator 30 am Aufbau des Kraftfahrzeuges drehbar gelagert, dessen im wesentlichen in Längsrichtung verlaufender Schenkel 30a die Spurstange 28 und den Lenker 16 quert und über eine nach unten ragende Koppelstange 44 und über Gelenke, z. B. Gummilager oder Kugelgelenke 46 mit dem gabelförmigen Abschnitt 24a des Stoßdämpfers 24 verbunden ist. Die Anlenkstelle der Koppelstange 44 am gabelförmigen Abschnitt 24a ist auf der Zeichnung nicht ersichtlich. Die Schenkel 30a des Stabilisators 30 sind derart nach oben und seitlich gekrümmt ausgeführt, dass der Freigang des Rades beim Lenkeinschlag und der Freigang der Spurstange 28 und des Lenkers 16 beim Durchfedern des Rades gewährleistet sind.

Durch die Ausrichtung der mit dem Stabilisator 30 verbundenen Koppelstange 44, die unmittelbar z. B. an den gabelförmigen Abschnitt 24a des Stoßdämpfers 24 oder Traglenkers angrenzt, wobei die Koppelstange 44 etwa parallel zur noch zu beschreibenden Lenkachse 46 aus-gerichtet ist, werden bei gleichseitigem und wechselseitigem Einfedern der Räder des Kraftfahrzeuges Einflüsse auf das Lenkverhalten nahezu eliminiert. Die Koppelstangen 44 sind dabei - wie in **Fig. 1** ersichtlich - in Rückansicht des Kraftfahrzeuges nach oben innen und in Seitenansicht nach oben vorne aus-gerichtet.

Die virtuelle Lenkachse 46 der Radaufhängung 10 (vgl. **Fig. 4**) definiert sich aus der räumlichen Anordnung der Lenker 12, 14, 16, 18 und den Koppelabständen aₒ und aᵤ der entsprechenden Lagerstellen 12b, 14b bzw. den Gelenkmittelpunkten der Kugelgelenke 34, 36. Dabei ergibt sich die virtuelle Lenkachse 46 in der Geradeausfahrtstellung der Räder des Kraftfahrzeuges aus den windschief zueinander stehenden, gedachten Geraden durch die oberen und unteren Lenkerlagerungen in der Art, dass in Blickrichtung der Lenkachse 46 alle vier Geraden einen Schnittpunkt bilden.

Beim Einlenken der Räder über den Lenkbereich (voller Linkseinschlag bis voller Rechtseinschlag) überstreicht die Lenkachse 46 eine gedachte Konusfläche, die nach unten der Radaufstandsebene des Rades zu abnimmt. Diese Kinematik der Lenkachse 46 ergibt sich dadurch, dass der obere Koppelabstand aₒ in der Projektion in Richtung der Lenkachse 46 gesehen größer ist als der untere Koppelabstand aᵤ zwischen den entsprechenden Lagerstellen 12b, 14b bzw. den Kugelgelenkpunkten 34, 36. Der tatsächliche, räumliche obere Koppelabstand aₒ ist dagegen bevorzugt kleiner als der tatsächliche, räumliche untere Koppelabstand aᵤ.

Der obere Koppelabstand aₒ bestimmt sich in der Regel aus den baulichen Gegebenheiten, und kann z.B. nicht kleiner ausgeführt sein, als dies die anzuordnenden Lagerstellen 12b, 14b (Kugelgelenke) zulassen.

Bei der Auslegung des unteren Koppelabstandes aᵤ ist noch zu berücksichtigen, dass der untere, vordere Lenker 16 als Traglenker ein größeres Kugelgelenk 36 erfordert, was der Vorgabe eines kleineren Koppelabstandes aᵤ an sich entgegensteht. Um trotzdem den gewünschten Koppelabstand aᵤ zu schaffen, sind die Kugelgelenke 34, 36 (vgl. **Fig. 2**) höhenversetzt zueinander und mit um 180 Grad zueinander verdrehten Kugelgelenken 34, 36 angeordnet; d.h., dass das Gehäuse 36a des Kugelgelenkes 36 unten in der Aufnahme 20b des Radträgers 20 positioniert ist, während das Gehäuse 34a darüber liegend in den Lenker 18 integriert ist. Die Gelenkzapfen (ohne Bezugszeichen) der Kugelgelenke 34, 36 ragen demzufolge entgegengesetzt ausgerichtet nach oben (Kugelgelenk 36) bzw. nach unten (Kugelgelenk 34).

Dies bewirkt eben, dass in der Projektion entlang der Lenkachse 46 gesehen der untere Koppelabstand aᵤ kleiner ist als der obere Koppelabstand aₒ mit der vorbeschriebenen Auswirkung auf die über den Lenkbereich sich ergebende Konusfläche der virtuellen Lenkachse 46.

Ferner ist die Anordnung der Lagerstellen bzw. Kugelgelenke 34, 36 des unteren Lenkers 16 am Radträger 20 derart ausgelegt, dass sich über den gesamten Lenkbereich der Radaufhängung eine überwiegend in Längsrichtung des Kraftfahrzeuges ausgerichtete Schnittfläche der von der Lenkachse 46 überstrichenen Konusfläche an der Radaufstandsfläche ergibt (vgl. Neigung der Geraden durch die Kugelgelenkmitten der Kugelgelenke 34, 36 in **Fig. 3** gegenüber der Fahrzeuglängsrichtung). Daraus resultiert eine verbesserte Lenkungsrückstellung der eingeschlagenen Räder in die Geradeausfahrtstellung, die die Lenkungsrückstellung ausgeübt von dem auf den vorderen, unteren Lenker 16 abgestützten Federbein 22, 24 unterstützt.

Die inneren Lenkerlager 16a, 18a der unteren Lenker 16, 18 sind in ihrer Federsteifigkeit unterschiedlich ausgelegt oder bevorzugt umschaltbare Gummi-Metall-Hülsenlager, die hydraulisch durch integrierte Hydraulikkammern und veränderbare Drosselelemente oder elektrisch mittels Befüllung mit einer rheologischen Flüssigkeit beaufschlagt sind. Derartige Lager sind an sich bekannt. Die Lenkerlager 16a, 18a werden abhängig von fahrspezifischen Parametern wie z.B. Geschwindigkeit des Kraftfahrzeuges, Fahrbahnzustand, Lenk- und Bremsreaktionen, Gierrate, Querbeschleunigung, Lenkwinkel der Räder, Beladungszustand, etc. über ein elektronisches Steuergerät (z.B. ESP) und/oder manuell umgeschaltet, um das Fahrverhalten des Kraftfahrzeuges von sportlich agil bis betont komfortabel einzustellen.

Die **Fig. 5** zeigt dazu, dass abhängig von den Lagersteifigkeiten der Lenkerlager 16a, 18a, in Verbindung mit der Ausrichtung der ebenfalls einen "steifen" Lenker darstellenden Spurstange 28 der Momentanpol Mp der unteren Lenker 16, 18 und des Radträgers 20 verändert und das Fahrverhalten des Kraftfahrzeuges von Übersteuernd in Untersteuernd bei Längs- und Seitenkräften ausgelegt werden kann.

Die Lage des Momentanpols Mp lässt sich zusätzlich aus der Pfeilung der unteren Lenker 16, 18 im Zusammenspiel mit der Spurstange 28 beeinflussen. Solange das Verhältnis der Steifigkeiten zwischen dem Lenkerlager 16a des quer abstützenden, vorderen Lenkers 16 zum Lenkerlager 18a des längs abstützenden, hinteren Lenkers 18 groß ist, kann letzterer in der Betrachtung vernachlässigt werden. Damit ergibt sich der Momentanpol Mp als Schnittpunkt der Wirklinien von Spurstange 28 und vorderem, unteren Lenker 16, wobei die Pfeilung derart ist, dass sich der Abstand zwischen der Spurstange 28 und dem Lenker 16 in der Draufsicht gesehen der senkrechten Fahrzeugmittelebene zu verjüngt.

Damit führt sowohl eine Längs- als auch eine Seitenkraft auf das Rad zu einer Spurwinkeländerung in Richtung Nachspur - das Fahrzeug reagiert im elastokinematischen Bereich untersteuernd. Gleichzeitig hat die Radaufhängung 10 aufgrund der geringeren Steifigkeit des unteren, hinteren Lenkerlagers 18a eine hohe Nachgiebigkeit in Längsrichtung, was sich bei einer Hindernisüberfahrt positiv im Komfort bemerkbar macht.

Wird die Steifigkeit des hinteren Lenkerlagers 18a merklich erhöht ― entweder durch entsprechende Ansteuerung des umschaltbaren Lenkerlagers 18a oder durch entsprechende konstruktive Auslegung ― so kann der Lenker 18 in der Betrachtung des Momentanpols Mp nicht mehr vernachlässigt werden. Die Lage des Momentanpols Mp ergibt sich nun aus der Ausrichtung der Spurstange 28 und einem virtuellen Ersatzlenker 48 **(Fig. 5,** gestrichelt eingezeichnet), der sich aus dem Steifigkeitsverhältnis der unteren Lenkerlager 16a, 18a ableiten lässt.

Gleichzeitig kann mit dem Steifigkeitsniveau der beiden unteren Lenker 16, 18 der Längs- und Seitenkrafteinfluss auf die Änderung des Spurwinkels des Rades begrenzt werden.

Die Erfindung ist nicht auf das beschriebene Ausführungsbeispiel beschränkt. So kann anstelle der oberen Lenker 12, 14 auch ein dreieckförmiger Querlenker verwendet sein. Anstelle eines Zahnstangenlenkgetriebes 26 kann auch eine andere Lenkung mit entsprechend angeordneten Spurstangen 28 eingesetzt sein.

## Patentansprüche

1. Radaufhängung für die gelenkten Räder eines Kraftfahrzeuges, mit je Rad zumindest einem oberen Lenker und zwei unteren aufgelösten Lenkern, die in jeweils einem definierten Winkel zueinander angeordnet sind und einerseits mit dem Aufbau des Kraftfahrzeuges und andererseits mit einem Radträger gelenkig verbunden sind, sowie mit einem die beiden unteren, vorderen Lenker über Koppelstangen verbindenden insbesondere U-förmigen Stabilisator und einem über Spurstangen an einem Lenkhebel des Radträgers angreifenden Lenkgetriebe, **dadurch gekennzeichnet, dass** die die Schenkel (30a) des Stabilisators (30) mit den unteren, vorderen Lenkern (16) bzw. dem Federbein (22, 24) verbindenden Koppelstangen (44) im wesentlichen parallel zur Lenkachse (46) der Räder ausgerichtet sind.

2. Radaufhängung nach Anspruch 1, **dadurch gekennzeichnet, dass** die Koppelstangen (44) in Seitenansicht gesehen vor der senkrechten Radmitte der Räder positioniert sind.

3. Radaufhängung nach Anspruch 1 oder 2, **dadurch gekennzeichnet, dass** die Koppelstangen (44) in Rückansicht des Kraftfahrzeuges gesehen nach oben innen geneigt sind.

4. Radaufhängung nach einem der Ansprüche 1 bis 3, **dadurch gekennzeichnet, dass** das Lenkgetriebe (26) mit den Spurstangen (28) in etwa auf Höhe der unteren Lenker (16, 18) und in Fahrtrichtung vor der Radmitte der Räder und der unteren, vorderen Lenker (16) angeordnet ist.

5. Radaufhängung nach einem der Ansprüche 1 bis 4, **dadurch gekennzeichnet, dass** der Stabilisator (30) in Fahrtrichtung vor den Spurstangen (28) positioniert ist, wobei seine in Längsrichtung verlaufenden Schenkel (30a) die Spurstangen (28) queren.

6. Radaufhängung nach einem der Ansprüche 1 bis 5, **dadurch gekennzeichnet, dass** die Koppelstangen (44) mittelbar oder unmittelbar mit dem unteren, vorderen Lenker (16) gelenkig verbunden sind.

7. Radaufhängung nach einem der Ansprüche 1 bis 6, **dadurch gekennzeichnet, dass** die Koppelstangen (44) an einem Verbindungsteil (24a) des Federbeines (22, 24) mit jeweils dem unteren, vorderen Lenker (16) gelenkig verbunden sind.

8. Radaufhängung nach Anspruch 3, **dadurch gekennzeichnet, dass** das Verbindungsteil (24a) eine den Lenker (16) teilweise umfassende Gabel ist und dass die Koppelstangen (44) an der Gabel (24a) des Federbeines (22, 24) angelenkt sind.

9. Radaufhängung nach einem der vorhergehenden Ansprüche, **dadurch gekennzeichnet, dass** die Schenkel (30a) des Stabilisators (30) zur Herstellung eines erforderlichen Freiganges zu den Spurstangen (28) und/oder den Rädern des Kraftfahrzeuges gekrümmt ausgebildet sind.

## Claims

1. Wheel suspension for the steerable wheels of a motor vehicle with at least one top guide rod and two bottom guide rods, which are released, per wheel, which are arranged at a defined angle to each other and are articulatedly connected on the one hand to the body of the motor vehicle and on the other hand to a wheel carrier as well as to a stabiliser, particularly with a U shape, connecting both bottom, front guide rods through coupling rods and a steering gear acting on a steering arm of the wheel carrier through tie rods, **characterised in that** the coupling rods (44) connecting the sides (30a) of the stabiliser (30) to the bottom, front guide rods (16) or the strut (22, 24) are aligned essentially parallel to the steering axle (46) of the wheels.

2. Wheel suspension according to claim 1, **characterised in that** the coupling rods (44) are positioned in front of the vertical wheel centre of the wheels, as seen from the side.

3. Wheel suspension according to claim 1 or 2, **characterised in that** the coupling rods (44) are bent upwards and inwards, as seen from the back of the motor vehicle.

4. Wheel suspension according to one of claims 1 to 3, **characterised in that** the steering gear (26) is arranged with the tie rods (28) at about the height of the bottom guide rods (16, 18) in front of the wheel centre of the wheels and the bottom front guide rods (16) in the direction of travel.

5. Wheel suspension according to one of claims 1 to 4, **characterised in that** the stabiliser (30) is positioned in front of the tie rods (28) in the direction of travel, in which its sides (30a) running in the longitudinal direction cross the tie rods (28).

6. Wheel suspension according to one of claims 1 to 5, **characterised in that** the coupling rods (44) are articulatedly connected directly or indirectly to the bottom, front guide rods (16).

7. Wheel suspension according to one of claims 1 to 6, **characterised in that** the coupling rods (44) on a connecting part (24a) of the strut (22, 24) are articulatedly connected to the bottom, front guide rods (16).

8. Wheel suspension according to claim 3, **characterised in that** the connecting part (24a) is a fork partly encompassing the guide rod (16) and the coupling rods (44) are articulatedly connected to the fork (24a) of the strut (22, 24).

9. Wheel suspension according to one of the previous claims, **characterised in that** the sides (30a) of the stabiliser (30) are made bent in order to create the free access necessary to the tie rods (28) and/or the wheels of the motor vehicle.

## Revendications

1. Suspension pour les roues directrices d'un véhicule automobile, comprenant par roue au moins un bras oscillant transversal supérieur et deux bras oscillants transversaux inférieurs détachés, qui sont disposés suivant respectivement un angle défini les uns par rapport aux autres et sont reliés les uns aux autres de façon articulée à la structure du véhicule automobile d'une part et d'autre part à un support de roue, et comprenant également un stabilisateur particulièrement en forme de U reliant les deux bras oscillants transversaux inférieurs avant par des barres d'accouplement et un boîtier de direction se mettant en prise par des barres de connexion sur un levier de direction du support de roue, **caractérisée en ce que** les barres d'accouplement (44) reliant les branches (30a) du stabilisateur (30) aux bras oscillants transversaux inférieurs avant (16) et/ou à la jambe de force (22, 24) sont orientées sensiblement parallèlement à l'essieu directeur (46) des roues.

2. Suspension selon la revendication 1, **caractérisée en ce que** les barres d'accouplement (44) sont positionnées, vu latéralement, devant le centre vertical des roues.

3. Suspension selon la revendication 1 ou 2, **caractérisée en ce que** les barres d'accouplement (44) sont inclinées vers le haut et l'intérieur vu dans la direction arrière du véhicule automobile.

4. Suspension selon l'une quelconque des revendications 1 à 3, **caractérisée en ce que** le boîtier de direction (26) comprenant les barres de connexion (28) à la hauteur sensiblement du bras oscillant transversal inférieur (16, 18) et dans le sens de marche devant le centre des roues et le bras oscillant transversal inférieur avant (16).

5. Suspension selon l'une quelconque des revendications 1 à 4, **caractérisée en ce que** le stabilisateur (30) est positionné dans le sens de marche devant les barres de connexion (28), ses branches (30a) s'étendant dans la direction longitudinale traversant les barres de connexion (28).

6. Suspension selon l'une quelconque des revendications 1 à 5, **caractérisée en ce que** les barres d'accouplement (44) sont reliées de manière articulée directement ou indirectement au bras oscillant transversal inférieur avant (16).

7. Suspension selon l'une quelconque des revendications 1 à 6, **caractérisée en ce que** les barres d'accouplement (44) sont reliées de manière articulée sur une partie de liaison (24a) de la jambe de force (22, 24) à chaque bras oscillant transversal inférieur avant (16).

8. Suspension selon la revendication 3, **caractérisée en ce que** la partie de liaison (24a) est une fourche comportant en partie le bras oscillant transversal (16) et **en ce que** les barres d'accouplement (44) sont articulées sur la fourche (24a) de la jambe de force (22, 24).

9. Suspension selon l'une quelconque des revendications précédentes, **caractérisée en ce que** les branches (30a) du stabilisateur (30) sont conçues de façon courbée pour donner l'accès libre nécessaire aux barres de connexion (28) et/ou aux roues du véhicule automobile.
